# EUROPÄISCHE PATENTSCHRIFT

(11) **EP 4 000 473 B1**
(45) Veröffentlichungstag und Bekanntmachung des Hinweises auf die Patenterteilung: **26.02.2025**
(21) Anmeldenummer: 21207185.6
(22) Anmeldetag: 09.11.2021
(51) Int. Cl.: A47G 19/18, A47G 21/14, A47J 43/28, B44D 3/12

(54) **HALTER**
HOLDER
SUPPORT

(30) Priorität: 12.11.2020 AT 2512020
(43) Veröffentlichungstag der Anmeldung: 25.05.2022
(73) Patentinhaber: Kowatsch, Claudia Mag., 9500 Villach (AT)
(72) Erfinder: Kowatsch, Hans-Jürg, 9500 Villach (AT)
(74) Vertreter: Beer & Partner Patentanwälte KG

(56) Entgegenhaltungen:
- WO-A1-97/09915
- FR-A1- 2 820 623
- US-A- 1 008 710
- US-A- 1 062 107
- US-A- 1 237 504
- US-A1- 2019 110 637
- US-B1- 7 140 148

## Beschreibung

Die Erfindung betrifft einen Halter für einen auf einem Gefäß abzulegenden länglichen Gegenstand, wie einen Besteckteil und/oder ein Küchenwerkzeug und/oder ein Maler- oder Maurerwerkzeug mit den Merkmalen des Oberbegriffes von Anspruch 1.

Häufig stellt sich das Problem, einen länglichen Gegenstand, wie ein Malerwerkzeug, Spachteln, Rührstäbe usw., so abzulegen, dass der Gegenstand griffbereit ist und unerwünschtes Verschmutzen durch von dem Gegenstand stammendes Material, wie Farbe, Klebstoff, Kleister usw., vermieden ist.

Immer wieder stellt sich auch das Problem, einen Besteckteil (Messer, Gabel oder Löffel) abzulegen, ohne diesen auf den Tisch, auf ein Tischtuch oder eine Serviette zu legen. Das führt bekanntlich zu unerwünschten Verschmutzungen.

Auch besteht bei Maler- oder Maurerarbeiten das Problem, Werkzeuge, wie Spachteln oder Rührstäbe, so abzulegen, dass Farbe, Kleister, Mörtel oder Ähnliches nicht auf den Boden oder die Arbeitsfläche tropft.

Auch ist es oft ein Problem, während des Kochens Küchenwerkzeuge abzulegen und dieses bei Bedarf rasch wieder zur Hand zu haben.

Auch ist erwünscht, den abgelegten Besteckteil oder das gerade nicht verwendete Küchenwerkzeug griffbereit zu haben.

Ein gattungsgemäßer Halter ist aus US 2019/110637 A1 bekannt. US 2019/110637 A1 offenbart einen Halter für einen auf dem Rand eines Gefäßes abzulegenden länglichen Gegenstand, wie ein Besteckteil, ein Küchenwerkzeug, ein Malerwerkzeug oder ein Maurerwerkzeug, wobei der Halter eine Auflage für ein Ende des Gegenstandes aufweist, wobei der Halter ein Bügel ist, der ein einteiliger, mehrfach umgebogener stabförmiger Körper ist, wobei die Schenkel des Bügels an ihren freien Enden Haken, die umgebogene Enden der Schenkel sind, aufweisen, und wobei der als Auflage dienende Steg des Bügels einschließlich der an den Steg anschließenden Bereiche der Schenkel von den die Haken tragenden Bereichen der Schenkel weg weist, wobei die den Steg tragenden Bereiche der Schenkel schlaufenartig abgebogene Bereiche aufweisen und dass der Steg gekrümmt ist, wobei die konkave Seite der Krümmung des Steges zu den die Haken tragenden Enden der Schenkel hin weist.

Ähnliche Halter offenbaren DE 343 837 C, GB 614,491 A, GB 347,818 A, DE 90 10 106 U1, CH 268 133 A und US 2,452,025.

US 1 237 504 A zeigt und beschreibt einen Halter aus Draht nach dem Oberbegriff des Anspruchs 1, mit dem ein Löffel an dem Rand eines Gefäßes abgelegt werden kann. Der Halter weist eine Auflage für den Löffel auf. Der Halter weist Haken auf, über die er an dem Rand des Gefäßes eingehängt werden kann. Die Auflage ist der U-förmige Bereich eines Teils des Halters, der etwa parallel zur Wand des Gefäßes verläuft. Der innerhalb des Gefäßes liegende Teil des Halters ist einfach U-förmig ausgebildet.

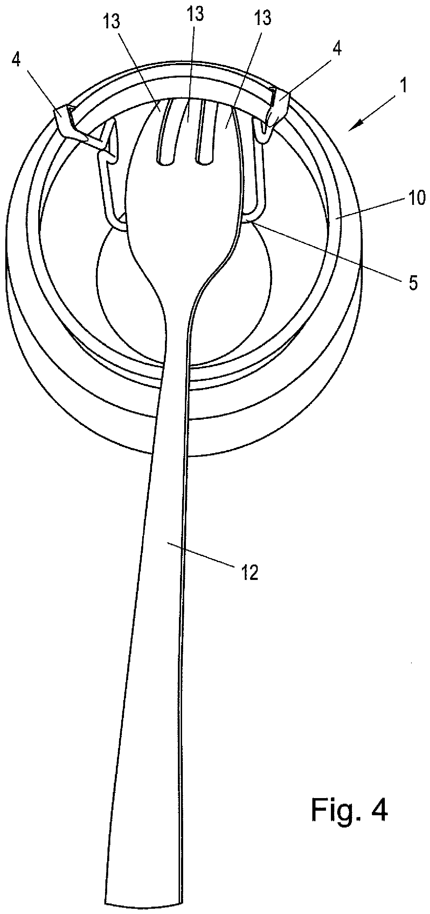

US 7,140,148 B1 betrifft ein auf einem Rand eines Gefäßes abzulegendes Gerät, mit dem eine Angelleine temporär festgehalten werden soll, bevor sie geworfen wird. Das Gerät soll über einen Clip an einem Bekleidungsstück (ein Gürtel in Fig. 4) befestigt werden. Die Angelleine wird in Schlaufen von dem Clip abstehenden Bügel aufgehängt und soll sich von dem Bügel lösen, sobald die Angelleine geworfen wird.

Der Erfindung liegt die Aufgabe zu Grunde, einen Halter für einen länglichen Gegenstand zur Verfügung zu stellen, der das Ablegen des Gegenstandes innerhalb des Randes eines Gefäßes verbessert.

Gelöst wird diese Aufgabe mit einem Halter, der die Merkmale von Anspruch 1 aufweist.

Bevorzugte und vorteilhafte Ausführungsformen des erfindungsgemäßen Halters sind Gegenstand der Unteransprüche.

Der erfindungsgemäße Halter kann mit seinen Haken am Rand eines Gefäßes, wie einer Schale, eines Tellers oder eines Glases (beispielsweise für Marmelade oder für Honig), eingehängt werden. Der Gegenstand, z.B. ein Besteckteil, wird dann einfach auf den Steg des Bügels aufgelegt und mit einem Ende am Rand des Gefäßes abgestützt. So steht das andere Ende, in der Regel schräg nach oben, über das Gefäß vor und kann einfach in die Hand genommen werden. Sinngemäßes gilt für das Ablegen von Küchenwerkzeugen an einem Kochgeschirr.

Es versteht sich, dass der erfindungsgemäße Halter nicht nur für Besteckteile, sondern auch für Küchenwerkzeuge, wie Kochlöffel, Schaufeln, Spachteln, Schöpfer oder Ähnliches, verwendet werden kann, um diese Küchenwerkzeuge an Gefäßen in Form von Kochgeschirr, wie Töpfen, Pfannen, Bechern, Kübeln und dergleichen gesichert und griffbereit abzulegen.

Ganz allgemein kann der erfindungsgemäße Halter für längliche Gegenstände beliebiger Art und Ausgestaltung, so auch für Maler- und Maurerwerkzeuge, verwendet werden.

Von Vorteil bei dem erfindungsgemäßen Halter ist es, dass der Gegenstand so auf die Auflage des Halters abgelegt werden kann, dass insbesondere der Bereich des länglichen Gegenstandes, von dem Material (Speisen, Marmelade, Honig, Farbe, Mörtel, Kleister, Klebstoff, Spachtelmasse und Ähnliches) abtropfen kann, innerhalb des Randes des Gefäßes angeordnet ist.

Ein Gegenstand wird unter Verwenden des erfindungsgemäßen Halters auf einem Gefäß so abgelegt, dass ein Ende des Gegenstandes auf der vom Steg gebildeten Auflage des erfindungsgemäßen Halters aufliegt und der Gegenstand mit einem Bereich, der von dem auf der Auflage aufliegenden Ende des Gegenstandes Abstand hat, auf dem Rand des Gefäßes in einem Bereich, der dem Halter gegenüberliegt, aufliegt.

Dabei ist besonders vorteilhaft, wenn beispielsweise ein Löffel mit Hilfe des erfindungsgemäßen Halters an einem Glas, wie einem Marmelade- oder Honigglas, angelegt wird, weil die Laffe des Löffels im Inneren des Glases angeordnet werden kann, so dass die an der Laffe anhaftende Substanz, wie der Inhalt des Glases, in das Glas abtropfen oder abrinnen kann. Das gilt sinngemäß auch für an dem Rand eines Kochgeschirrs abgelegte Küchenwerkzeuge, da an Küchenwerkzeugen hatende Speiseteile nicht auf den Herd oder die Küchenplatte gelangen können, sondern in das Kochgeschirr fallen.

Weitere Einzelheiten und Vorteile des erfindungsgemäßen Halters ergeben sich aus der nachstehenden Beschreibung eines Ausführungsbeispiels an Hand der Zeichnungen. Es zeigt:
- Fig. 1: in Schrägansicht einen Halter,
- Fig. 2: den Halter aus Fig. 1 in anderer Ansicht,
- Fig. 3: den an dem Rand eines Glases angesetzten Halter und
- Fig. 4: einen an einem Glas angesetzten Halter mit einer Gabel.

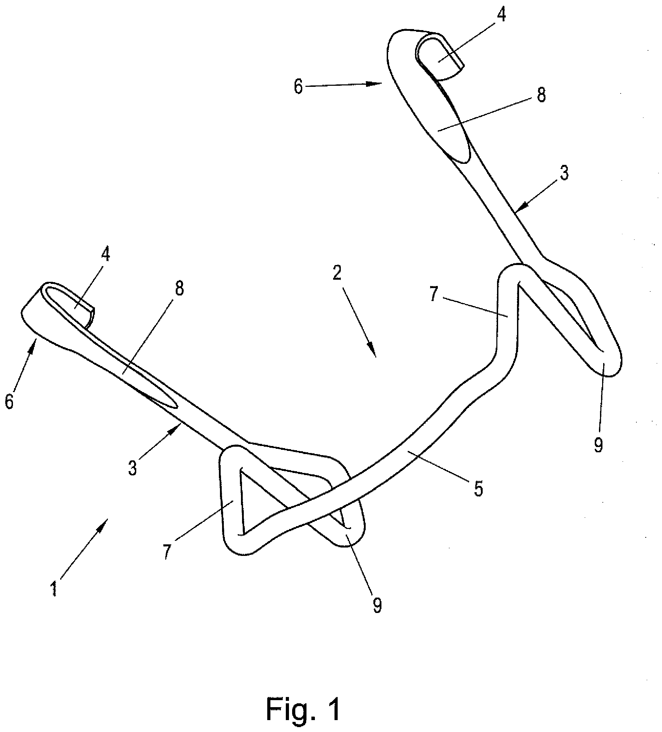

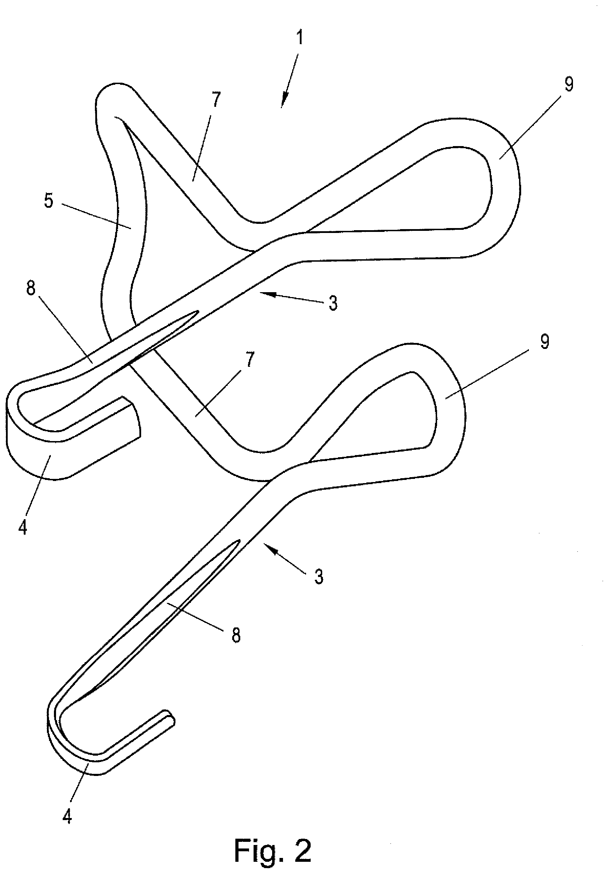

Ein in den Fig. 1 und 2 gezeigter Halter 1 ist ein Bügel 2 mit zwei Schenkeln 3 und einem zwischen den Schenkeln 3 angeordneten Steg 5. Der Steg 5 verbindet die Schenkel 3 miteinander.

Die freien, vom Steg 3 entfernt liegenden Enden 6 der Schenkel 3 weisen Haken 4 auf. Die Haken 4 sind umgebogene Enden 6 der Schenkel 3. Dabei ist vorgesehen, dass die Haken 4 auf der vom Steg 5 des Bügels abgewandten Seite der Schenkel 3 angeordnet sind.

Die dem Steg 5 benachbarten Bereiche 7 der Schenkel 3 sind zu den die Haken 4 tragenden Bereichen 8 der Schenkel 3 unter einem Winkel in der Größenordnung von 90° ausgerichtet.

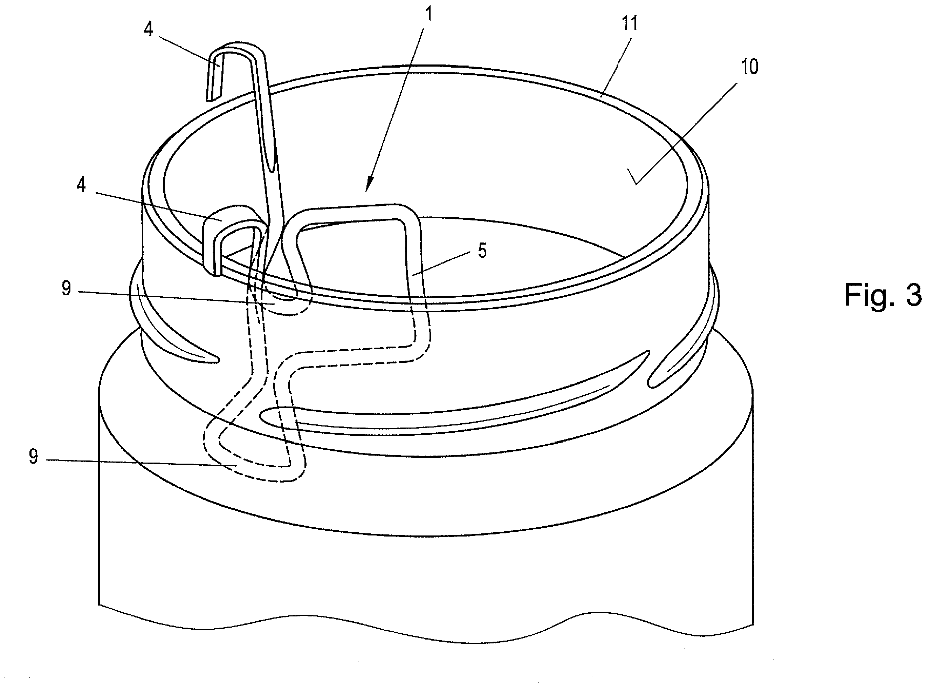

Wie die Fig. 1 und 2 zeigen, weisen die Schenkel 3 schlaufenartig umgebogene Bereiche 9 auf. Mit diesen schlaufenartigen Bereichen 9 stützt sich der Halter 1 an der Innenseite eines Gefäßes 10 ab, wie das in Fig. 3 am Beispiel eines marmelade- oder Honigglases gezeigt ist.

Es besteht bei der in den Fig. 1 bis 3 gezeigten Ausführungsform des Halters 1 die Möglichkeit, dem Halter 1 eine Form zu geben, die bewirkt, dass der Halter 1 mit Vorspannung an dem Rand 11 des Glases 10 angesetzt ist.

Der eine Auflage des Halters 1 bildende Steg des Bügels 2 ist gekrümmt ausgebildet, wobei die konkave Seite der Krümmung des Steges 5 auf der Seite der Haken 4 an den Stegen 3 liegt. Die Krümmung des Steges 5 verbessert und sichert den halt eines auf den Halter 1 abgelegten Besteckteils (vgl. Fig. 4).

Der Halter kann aus weitgehend beliebigem Werkstoff bestehen. Der Werkstoff, ein stabförmiger Körper, ist beispielsweise ein Stab aus Kunststoff oder ein Draht aus Metall. Gemäß der Erfindung ist der Halter 1 einteilig ausgebildet. Der Halter 1 kann durch mehrfaches Ab- und Umbiegen des stabförmigen Werkstoffes (z.B. Draht) hergestellt sein.

Vorteilhaft ist ein stabförmiger Werkstoff mit (kreis-)runder Querschnittsform (Stab oder Draht). Bloß im Bereich der zu Haken 4 umgebogenen Enden 6 der Schenkel 3 kann der stabförmige Werkstoff eine abgeflachte, beispielsweise rechteckige, Querschnittsform aufweisen. Eine abgeflachte Querschnittsform der Haken 4 erlaubt es, den Halter 1 so an den Rand eines Gefäßes anzusetzen, dass auf das Gefäß ein Deckel aufgesetzt, z.B. aufgeschraubt, werden kann. Das Ansetzen eines Deckels wird erleichtert, wenn die Haken 4 zusätzlich schmal ausgebildet sind.

Der Werkstoff des Halters ist bevorzugt korrosionsbeständig oder mit einer korrosionsschützenden Beschichtung versehen. Wenngleich die Erfindung vorstehend beispielhaft an Hand einer Gabel erläutert ist, ist die Verwendung des Halters nicht auf Gabeln oder andere Besteckteile beschränkt. Vielmehr kann der erfindungsgemäße Halter auch für längliche Gegenstände, wie beispielsweise Küchenwerkzeuge und/oder Maler- und Maurerwerkzeuge, verwendet werden, um diese innerhalb des Randes eines Gefäßes, wie einem Kochgeschirr, abzulegen.

## Patentansprüche

1. Halter für einen auf dem Rand eines Gefäßes abzulegenden länglichen Gegenstand, wie ein Besteckteil, ein Küchenwerkzeug, ein Malerwerkzeug oder ein Maurerwerkzeug, wobei der Halter (1) eine Auflage für ein Ende des Gegenstandes aufweist, wobei der Halter (1) ein Bügel (2) ist, der ein einteiliger, mehrfach umgebogener stabförmiger Körper ist, wobei die Schenkel (3) des Bügels (2) an ihren freien Enden (6) Haken (4), die umgebogene Enden (6) der Schenkel (3) sind, aufweisen, wobei der als Auflage dienende Steg (5) des Bügels (2) einschließlich der an den Steg (5) anschließenden Bereiche (7) der Schenkel (3) von den die Haken (4) tragenden Bereichen (8) der Schenkel (3) weg weist, wobei die den Steg (5) tragenden Bereiche (9) der Schenkel (3) schlaufenartig abgebogene Bereiche aufweisen, wobei der Steg (3) gekrümmt ist, und wobei die konkave Seite der Krümmung des Steges (3) zu den die Haken (4) tragenden Enden (6) der Schenkeln (3) hin weist, **dadurch gekennzeichnet, dass** der Bügel (2) einschließlich des als Auflage dienenden Steges (5) und der Schenkel (3) eine runde und die Haken (4) eine abgeflachte, insbesondere rechteckige Querschnittsform haben.

2. Halter nach Anspruch 1, **dadurch gekennzeichnet, dass** der Steg (5) einschließlich der an den Steg (5) anschließenden Bereiche (7) der Schenkel (3) von den die Haken (4) tragenden Bereichen (8) der Schenkel (3) in einem im Wesentlichen rechten Winkel weg weist.

3. Halter nach Anspruch 1 oder 2, **dadurch gekennzeichnet, dass** die Haken (4) an den Enden (6) der Schenkel (3) von den Schenkeln (3) auf die von dem Steg (5) abgekehrten Seite der Schenkel (3) hin abstehen.

4. Halter nach einem der Ansprüche 1 bis 3, **dadurch gekennzeichnet, dass** der stabförmige Körper, aus dem der Halter (1) besteht, ein Stab oder Draht ist.

5. Halter nach Anspruch 4, **dadurch gekennzeichnet, dass** der Stab oder der Draht ein korrosionsbeständiger oder ein korrosionsschützend beschichteter Draht aus Metall oder ein Stab aus Kunststoff ist.

## Claims

1. Holder for an elongate object, such as a piece of cutlery, a kitchen tool, a painter's tool or a mason's tool, to be placed on the rim of a vessel, wherein the holder (1) has a support for one end of the object, wherein the holder (1) is a bracket (2) which is a one-piece, multiply bent rod-shaped body, wherein the legs (3) of the bracket (2) have hooks (4) at their free ends (6) which are bent-over ends (6) of the legs (3), wherein the web (5) of the bracket (2) serving as a support, including the regions (7) of the legs (3) adjoining the web (5), faces away from the regions (8) of the legs (3) bearing the hooks (4), wherein the regions (9) of the legs (3) bearing the web (5) have regions bent back in a loop-like manner, wherein the web (3) is curved, and wherein the concave side of the curvature of the web (3) faces towards the ends (6) of the legs (3) bearing the hooks (4), **characterized in that** the bracket (2), including the web (5) serving as a support and the legs (3), has a round cross-sectional shape and the hooks (4) have a flattened, in particular rectangular, cross-sectional shape.

2. Holder according to claim 1, **characterized in that** the web (5), including the regions (7) of the legs (3) adjoining the web (5), faces away from the regions (8) of the legs (3) bearing the hooks (4) at a substantially right angle.

3. Holder according to claim 1 or 2, **characterized in that** the hooks (4) at the ends (6) of the legs (3) project from the legs (3) onto that side of the legs (3) which faces away from the web (5).

4. Holder according to one of claims 1 to 3, **characterized in that** the rod-shaped body of which the holder (1) consists is a rod or wire.

5. Holder according to claim 4, **characterized in that** the rod or wire is a corrosion-resistant wire or a wire made of metal that has an anti-corrosion coating or is a rod made of plastic.

## Revendications

1. Support pour un objet allongé à déposer sur le bord d'un récipient, tel qu'un couvert, un ustensile de cuisine, un outil de peintre ou un outil de maçon, le support (1) présentant un appui pour une extrémité de l'objet, le support (1) étant un étrier (2) qui est un corps en forme de tige d'une seule pièce, replié plusieurs fois, les branches (3) de l'étrier (2) présentant à leurs extrémités libres (6) des crochets (4) qui sont des extrémités repliées (6) des branches (3), la barrette (5) de l'étrier (2) servant d'appui, y compris les zones (7) des branches (3) se raccordant à la barrette (5), étant orientée à l'opposé des zones (8) des branches (3) portant les crochets (4), les zones (9) des branches (3) portant la barrette (5) présentant des zones repliées en forme de boucle, la barrette (3) étant incurvée, et le côté concave de la courbure de la barrette (3) étant dirigé vers les extrémités (6) des branches (3) portant les crochets (4), **caractérisé en ce que** l'étrier (2), y compris la barrette (5) servant d'appui, et les branches (3) ont une forme de section ronde et les crochets (4) une forme de section aplatie, en particulier rectangulaire.

2. Support selon la revendication 1, **caractérisé en ce que** la barrette (5), y compris les zones (7) des branches (3) se raccordant à la barrette (5), est orientée à l'opposé des zones (8) des branches (3) portant les crochets (4) en formant un angle sensiblement droit.

3. Support selon la revendication 1 ou 2, **caractérisé en ce que** les crochets (4) aux extrémités (6) des branches (3) font saillie des branches (3) vers le côté des branches (3) opposé à la barrette (5).

4. Support selon l'une des revendications 1 à 3, **caractérisé en ce que** le corps en forme de tige dont est constitué le support (1) est une tige ou un fil.

5. Support selon la revendication 4, **caractérisé en ce que** la tige ou le fil est un fil métallique résistant à la corrosion ou revêtu d'une protection anticorrosion, ou une tige en matière plastique.
